# EUROPEAN PATENT SPECIFICATION

(11) **EP 4 067 705 B1**
(45) Date of publication and mention of the grant of the patent: **03.12.2025**
(21) Application number: 20893037.0
(22) Date of filing: 30.10.2020
(51) Int. Cl.: F16H 63/34, F16H 63/48, F16H 63/30

(54) **GEAR SHIFTING AND PARKING SYSTEM FOR VEHICLE, AND VEHICLE**
GETRIEBESCHALT- UND PARKSYSTEM FÜR FAHRZEUGE UND EIN FAHRZEUG
SYSTÈME DE PASSAGE DE VITESSES ET DE STATIONNEMENT POUR VÉHICULE ET VÉHICULE

(30) Priority: 25.11.2019 CN 201922055133 U
(43) Date of publication of application: 05.10.2022
(73) Proprietor: Hycet Transmission System (Jiangsu) Co., Ltd. Baoding Research and Development Branch, Baoding, Hebei 071000 (CN)
(72) Inventor: ZHANG, Haoyuan, Baoding, Hebei 071000 (CN); LI, Jianyong, Baoding, Hebei 071000 (CN); WU, Haidong, Baoding, Hebei 071000 (CN); XIA, Haijun, Baoding, Hebei 071000 (CN)
(74) Representative: Epping - Hermann - Fischer
(86) International application number: PCT/CN2020/125043
(87) International publication number: WO 2021/103924

(56) References cited:
- EP-A1- 2 275 719
- EP-A1- 2 275 719
- EP-A1- 2 275 719
- EP-A1- 2 469 130
- CN-A- 105 650 273
- CN-A- 106 812 929
- CN-U- 211 117 538
- DE-A1- 102010 054 911
- DE-A1- 102012 012 673
- DE-A1- 102012 012 673
- DE-A1- 102014 102 831
- DE-A1- 102018 101 098
- DE-A1- 19 924 335
- US-B1- 7 757 576

## Description

### FIELD

The present application relates to the technical field of vehicles, and in particular to a gear shifting and parking system for a vehicle and the vehicle having the gear shifting and parking system.

### BACKGROUND

In the relate technologies, a parking system is an indispensable part of a vehicle, which is convenient for parking and can prevent a car from slipping during parking.

In the existing parking system, however, in the process that a parking pawl is driven by a parking arm to realize parking through the cooperation between the parking pawl and a ratchet, a force between the parking pawl driven by the parking arm and the ratchet is apt to fail, which causes the failure of the parking system and reduces the parking safety.

Document EP 2469130 A1 discloses an automatic or semiautomatic transmission for a motorized vehicle, comprising a guide which is arranged to receive and control the position of at least two guided members, the position of a guided member controls the mode of operation of a predetermined actuation device e.g. gear selector, clutch plate or park brake etc. By moving said guide relative said guided members, the guided members are synchronously arranged at sequential pairs of positions, wherein said pairs of positions correspond to predetermined combinations of modes of operations of said actuation devices. In this way a synchronized and sequential series of movements of at least two actuation devices is provided, which may synchronize the movement of e.g. a gear selector and a clutch such that a change from a first gear via a neutral gear to a second gear is provided.

Document EP 2275719A1 discloses a gearbox has a rotation blocking mechanism selectively cooperating with an output shaft of a casing, where the casing comprises an input shaft and gears. Each gear is formed by a fixed pinion carried by one of the shafts, and an idle pinion carried by the other shaft. Jaw clutching units of each pinion comprise a jaw clutch axially movable under the action of forks moved by an actuator common to the jaw clutching units. The blocking mechanism has a control unit formed by the actuator, where the actuator comprises a cylinder rotatably moved by an electric motor.

### SUMMARY

The present invention aims to solve at least one of the technical problems existing in the conventional technology. Therefore, one object of the present application is to provide a gear shifting and parking system for a vehicle as set out in the appended claims 1 to 5, which has high integration, few components, small space occupation and low cost.

A vehicle having the above gear shifting and parking system is provided as set out in claim 6.

The gear shifting and parking system for the vehicle according to an embodiment of a first aspect of the invention includes a driving mechanism, a parking mechanism and a gear shifting mechanism, the gear shifting mechanism includes a gear shifting hub and a first shifting head, a first gear shifting groove and a second gear shifting groove are defined in the gear shifting hub; the first shifting head is in sliding fit with the first gear shifting groove to realize shifting among multiple gears; the parking mechanism has a second shifting head, and the second shifting head is in sliding fit with the second gear shifting groove to realize shifting between a parking gear and a driving gear. The parking mechanism includes a parking arm and a ratchet, the parking arm is in power connection with the second shifting head, and the parking arm selectively moves toward or away from the ratchet driven by the second shifting head. A driving rod is provided between the parking arm and the second shifting head, one end of the driving rod is connected to the second shifting head through a bracket, and another end of the driving rod is constructed as a truncated cone and a conical surface abuts against the parking arm. The gear shifting and parking system includes a housing. The second gear shifting groove is in communication with the first gear shifting groove, the second gear shifting groove is provided with a parking groove section and a driving groove section which correspond to the parking gear and the driving gear, the first gear shifting groove is provided with multiple gear groove sections which correspond to multiple gears, and the first shifting head is located in a corresponding gear groove section when the second shifting head is located in the parking groove section or the driving groove section.

In this way, on one hand, the gear shifting and parking system of this embodiment has high integration, few components and small space occupation; on the other hand, a response speed of shifting between the parking gear P and the driving gear N-P is improved, and the structural stability of the parking mechanism at the parking gear P is improved, the parking mechanism is prevented from failing at the parking gear P, the parking safety is improved, and slipping is avoided. In some preferred embodiments, a pawl of the parking arm is located above the ratchet, a depth of the second gear shifting groove changes correspondingly according to the gear shifting of the parking mechanism, so that the parking arm is locked with the ratchet under gravity.

Furthermore, the gear shifting mechanism preferably includes a shifting fork and a shifting fork shaft, the first shifting head is arranged on the shifting fork, the shifting fork shaft is in sliding fit with the shifting fork and an anti-wear bushing is provided between the shifting fork shaft and the shifting fork.

In some preferred embodiments, the driving mechanism includes a driving motor and a transmission assembly in power connection with the driving motor, and the transmission assembly is in power connection with the gear shifting hub.

Furthermore, the transmission assembly includes an input gear, an intermediate gear and an output gear, the input gear is connected to the driving motor, the output gear is meshed with a gear shifting hub gear of the gear shifting hub, and the intermediate gear is respectively meshed with the input gear and the output gear.

Additional aspects and advantages of the present invention are further described in the following description, which will become apparent from the following description or be learned through the practice of the present invention.

### BRIEF DESCRIPTION OF THE DRAWINGS

The above and/or additional aspects and advantages of the present invention will become apparent and easy to understand from the description of the embodiments in conjunction with the following accompanying drawings, in which:
FIG. 1 is a schematic view of a gear shifting and parking system according to an embodiment of the present invention;
FIG. 2 is a exploded view of the gear shifting and parking system according to the embodiment of the present invention; and
FIG. 3 is a schematic view showing a cooperation of a second shifting head and a first shifting head with a second gear shifting groove and a first gear shifting groove of the gear shifting and parking system according to the embodiment of the present invention.

Reference numerals are as follows:

| | | | |
|---|---|---|---|
| 100, | gear shifting and parking system; | | |
| 10, | driving mechanism; | 11, | driving motor; |
| 12, | transmission assembly; | 121, | input gear; |
| 122, | intermediate gear; | 123, | output gear; |
| 20, | gear shifting mechanism; | 21, | gear shifting hub; |
| 211, | gear shifting hub gear; | 22, | first shifting head; |
| 23, | shifting fork; | 24, | shifting fork shaft; |
| 30, | parking mechanism; | 31, | second shifting head; |
| 32, | parking arm; | 33, | ratchet; |
| 34, | driving rod; | 35, | first fork head; |
| 36, | second fork head; | | |
| a, | first gear shifting groove; | b, | second gear shifting groove; |
| P, | parking gear; | N-P, | driving gear; |
| 1st, | first gear, | 2nt, | second gear; |
| N, | neutral gear. | | |

### DETAILED DESCRIPTION OF THE EMBODIMENTS

The embodiments of the present invention are described in detail hereinafter, and examples of the embodiments are shows in drawings, in which the same or similar reference numerals represent the same or similar members or members having the same or similar functions throughout the description. The embodiments described below with reference to the drawings are only exemplary embodiments which are used to explain the present invention, and should not be construed to limit the present invention, which is defined by the appended claims.

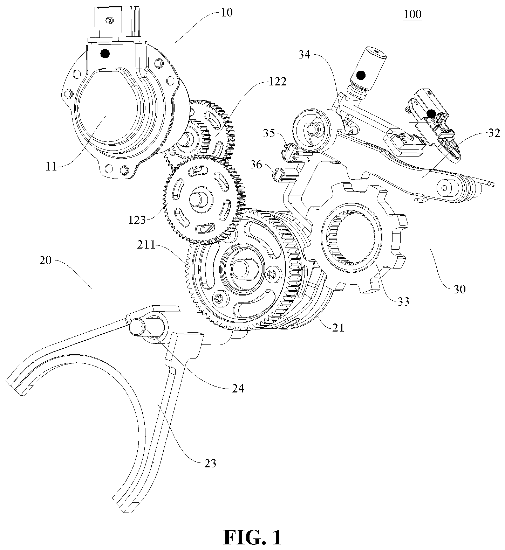

A gear shifting and parking system 100 for a vehicle according to an embodiment of the present invention is described below with reference to FIGS. 1 to 3.

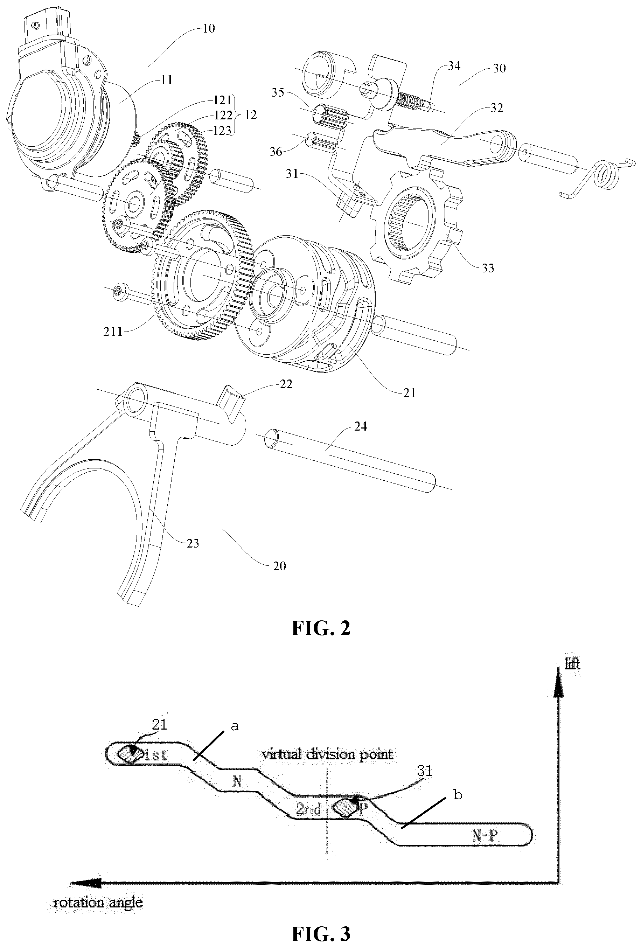

As shown in FIG. 1 and FIG. 2, the gear shifting and parking system 100 for the vehicle according to the embodiment of the present invention includes a driving mechanism 10, a parking mechanism 30 and a gear shifting mechanism 20, the gear shifting mechanism 20 includes a gear shifting hub 21 and a first shifting head 22, and a first gear shifting groove ***a*** and a second gear shifting groove ***b*** are defined in the gear shifting hub 21.

As shown in FIG. 3, the first shifting head 22 is in sliding fit with the first gear shifting groove ***a*** to realize shifting among multiple gears; the parking mechanism 30 has a second shifting head 31, and the second shifting head 31 is in sliding fit with the second gear shifting groove b to realize shifting between a parking gear **P** and a driving gear **N-P.**

Specifically, the gear shifting hub 21 of the gear shifting mechanism 20 may selectively rotate clockwise or counterclockwise, so as to drive the second shifting head 31 to move to realize shifting from the parking gear P to the driving gear **N-P** when the gear shifting hub 21 rotating clockwise or counterclockwise; correspondingly, so as to drive the second shifting head 31 to move to realize shifting from the driving gear **N-P** to the parking gear **P** when the gear shifting hub 21rotating counterclockwise or clockwise.

In addition, the gear shifting hub 21 can not only control the parking mechanism 30 to realize shifting between the parking gear **P** and the driving gear **N-P,** but also control the gear shifting mechanism 20 to realize shifting among multiple gears, so that the gear shifting mechanism 20 is highly integrated with the parking mechanism 30, which can improve the working stability of the gear shifting mechanism 20 and the parking mechanism 30 while reducing the cost.

It should be noted that the gear shifting mechanism 20 may have multiple gears, which means that the gear shifting mechanism 20 has at least two gears and one neutral gear **N.**

It can be understood that the gear shifting mechanism 20 and the parking mechanism 30 share a gear shifting hub 21, and realize gear shifting and parking through the driving mechanism 10, so that the gear shifting and parking system 100 of this embodiment has a relatively high integration, few components, low cost and small space occupation.

The gear shifting and parking system 100 according to this embodiment of the present invention, the shifting of the parking mechanism 30 between the parking gear **P** and the driving gear **N-P** is realized by the gear shifting hub 21 driving the second shifting head 31 in sliding fit with the gear shifting hub 21, and the shifting of the gear shifting mechanism 20 among multiple gears is realized by the gear shifting hub 21 driving the first shifting head 22 in sliding fit with the gear shifting hub 21.

In this way, on one hand, the gear shifting and parking system 100 according to this embodiment has high integration, few components and small space occupation; on the other hand, a response speed of shifting between the parking gear **P** and the driving gear **N-P** is improved, and the structural stability of the parking mechanism 30 at the parking gear **P** is improved, the parking mechanism 30 is prevented from failing at the parking gear **P,** the parking safety is improved, and slipping is avoided.

In addition, the gear shifting mechanism 20 is integrated with the parking mechanism 30, so that the assembly of the gear shifting and parking system 100 is simple, the operation of gear shifting and parking is smooth, and the response speed is high.

According to some embodiments of the present invention, the parking mechanism 30 includes a parking arm 32 and a ratchet 33, the parking arm 32 is in power connection with the second shifting head 31, and the parking arm 32 selectively moves toward or away from the ratchet 33 driven by the second shifting head 31.

It can be understood that a pawl is provided at one end, cooperating with the ratchet 33, of the parking arm 32, another end of the parking arm 32 cooperates with the second shifting head 31, so that the pawl moves toward or away from the ratchet 33 driven by the second shifting head 31, and the parking mechanism 30 is shifted to the parking gear **P** when the pawl is locked with the ratchet 33.

In some embodiments, the pawl of the parking arm 32 is located above the ratchet 33, a depth of the second gear shifting groove ***b*** changes correspondingly according to the gear shifting of the parking mechanism 30, so that the parking arm 32 is locked with the ratchet 33 under gravity.

That is, one end of the parking arm 32 is directly connected to the second shifting head 31, the second shifting head 31 abuts in the second gear shifting groove ***b*,** and a part of the second gear shifting groove ***b*** corresponds to the parking gear **P,** another part of the second gear shifting groove ***b*** corresponds to the driving gear **N-P,** so that a depth of the part corresponding to the parking gear **P** is greater than a depth of the another part corresponding to the driving gear **N-P,** thus the second shifting head 31 falls into positions of different depths under the gravity and the rotation of the gear shifting hub 21 to drive the pawl to move toward or away from the ratchet 33, so as to realize the shifting between the parking gear **P** and the driving gear **N-P.**

As shown in FIG. 2, the gear shifting mechanism 20 of this embodiment is not limited to this. In other embodiments, a driving rod 34 is provided between the parking arm 32 and the second shifting head 31, one end of the driving rod 34 is connected to the second shifting head 31 through a bracket, and another end of the driving rod 34 is constructed as a truncated cone and conical surface thereof abuts against the parking arm 32.

Specifically, a part of the second gear shifting groove ***b*** corresponds to the parking gear **P,** another part of the second gear shifting groove ***b*** corresponds to the driving gear **N-P,** so that the part corresponding to the parking gear **P** and the another part corresponding to the driving gear are spaced apart in an axial direction of the gear shifting hub 21, and the two parts are transitionally connected.

Therefore, the second shifting head 31 is driven by the gear shifting hub 21 to perform a linear reciprocating motion relative to the gear shifting hub 21 in the axial direction of the gear shifting hub 21, so that the driving rod 34 connected to the second shifting head 31 performs a linear reciprocating motion, and the another end of the driving rod 34 constructed as a truncated cone drives a limiting member cooperating with the parking arm 32 or directly drives one end, with the pawl, of the parking arm 32 to move toward or away from the ratchet 33, to realize the shifting between the driving gear N-P and the parking gear P.

It should be noted that being constructed as a truncated cone means that a cross section area of the portion gradually increases or decreases, and there is a smooth transition between two ends, so that a projection of the part is trapezoidal or a triangular, and a cross section of the truncated cone is configured to drive the parking arm 32 to move, that is, gradually push the parking arm 32 to move toward or away from the ratchet during the swing of the driving rod 34.

Referring to FIG. 2, a reset member is respectively provided on the parking arm 32 and the driving rod 34.

It can be understood that, the gear shifting and parking system 100 further includes a housing, a first fork head 35 and a second fork head 36 are provided on the driving rod 34, and the first fork head 35 and the second fork head 36 are in inserting fit with the housing to limit a swing of the parking mechanism 30. Therefore, by limiting the movement of the parking mechanism 30 through the first fork head 35 and the second fork head 36 which are inserted in the housing, a swing amount of the second shifting head 31 when moving in the second gear shifting groove ***b*** can be reduced, which avoids the disengagement of the pawl and the ratchet 33 in the parking gear **P,** and improves the stability of gear shifting.

The working mode of the gear shifting and parking system 100 of this embodiment is described in detail below with a specific embodiment.

As shown in FIG. 3, the gear shifting mechanism 20 has a neutral gear **N,** a first gear 1st and a second gear 2nd, the parking mechanism 30 includes a driving gear **N-P** and a parking gear **P,** the first gear shifting groove ***a*** includes a neutral gear N groove section, a first gear 1st groove section and a second gear 2nd groove section (corresponding to the first gear 1st, the second gear 2nd and the neutral gear **N** respectively), the second gear shifting groove ***b*** includes a driving groove section and a parking groove section, the parking groove section corresponds to a part of the first gear 1st groove section, the driving groove section corresponds to another part of the first gear 1st groove section, the second gear 2nd groove section and a third gear groove section, so that the first shifting head 22 is located in corresponding groove section when the second shifting head 31 is located in a certain groove section.

Specifically, the gear shifting mechanism 20 is in the first gear 1st when the parking mechanism is in the parking gear **P,** and the gear shifting mechanism 20 is in the neutral gear N, the first gear 1st or the second gear 2nd when the parking mechanism 30 is in the driving gear N-P.

For example:
in a parking state, the parking mechanism 30 is in the parking gear **P,** and the driving mechanism is in the first gear 1st;
in a starting state, the parking mechanism 30 is in the driving gear **N-P,** and the driving mechanism is in the neutral gear **N;**
in a low-speed state, the parking mechanism 30 is in the driving gear **N-P,** and the driving mechanism is in the first gear 1st; and
in a high-speed state, the parking mechanism 30 is in the driving gear **N-P,** and the driving mechanism is in the second gear 2nd.

In other words, the second shifting head 31 and the first shifting head 22 are located in the groove sections corresponding to the gears. In this way, when the vehicle is in the starting state or the driving state, the parking mechanism 30 is ensured to be in the driving gear **N-P,** which can avoid interference between the parking mechanism 30 and the driving mechanism, and improve the working stability of the gear shifting and parking system 100.

That is, the second gear shifting groove ***b*** is in communication with the first gear shifting groove ***a**,* the second gear shifting groove ***b*** is provided with the parking groove section and the driving groove section which correspond to the parking gear **P** and the driving gear **N-P,** the first gear shifting groove ***a*** is provided with multiple gear groove sections which correspond to multiple gears, and the first shifting head 22 is located in a corresponding gear groove section when the second shifting head 31 is located in the parking groove section or the driving groove section.

It should be noted that, in FIG. 3, a rotation angle refers to a rotation angle of the gear shifting hub 21, a lift refers to change of positions of the second shifting head 31 and the first shifting head 22 in the axial direction of the gear shifting hub 21, and a virtual division point refers to a position where the second gear shifting groove ***b*** is in communication with the first gear shifting groove ***a**.*

Furthermore, the gear shifting mechanism 20 includes a shifting fork 23 and a shifting fork shaft 24, the first shifting head 22 is arranged on the shifting fork 23, the shifting fork shaft 24 is in sliding fit with the shifting fork 23 and an anti-wear bushing is provided between the shifting fork shaft 24 and the shifting fork 23.

In addition, the shifting fork shaft 24 is fixed on the housing, the shifting fork 23 is slidably arranged on the shifting fork shaft 24, one end of the shifting fork 23 is connected to the first shifting head 22, another end of the shifting fork 23 is used for gear shifting, and an anti-wear bushing is provided between the shifting fork 23 and the shifting fork shaft 24.

In this way, on one hand, only the shifting fork 23 moves, and the shifting fork shaft 24 is relatively fixed, so that few components need to be moved during the gear shifting of the gear shifting mechanism 20, which can improve the response speed of the gear shifting; and on the other hand, the friction between the shifting fork shaft 24 and the shifting fork 23 is reduced by providing the anti-wear bushing so as to reduce friction loss, further improve the response speed of the gear shifting, and prolong the service life of the shifting fork 23 and the shifting fork shaft 24.

In the specific embodiment shown in FIG. 2, the driving mechanism 10 includes a driving motor 11 and a transmission assembly 12 in power connection with the driving motor 11, and the transmission assembly 12 is in power connection with the gear shifting hub 21. Therefore, the transmission assembly 12 is driven by the driving motor 11, and the transmission assembly 12 drives the gear shifting hub 21 to rotate forward or reverse to realize the gear shifting of the parking mechanism 30 and the gear shifting of the gear shifting mechanism 20, so that the gear shifting of the parking mechanism 30 and the gear shifting of the gear shifting mechanism 20 are simple and convenient.

Furthermore, the transmission assembly 12 includes an input gear 121, an intermediate gear 122 and an output gear 123, the input gear 121 is connected to the driving motor 11, the output gear 123 is meshed with a gear shifting hub gear 211 of the gear shifting hub 21, and the intermediate gear 122 is respectively meshed with the input gear 121 and the output gear 123.

In this way, the transmission assembly 12 can effectively reduce the speed and increase the torque of the driving motor 11, so that the movement of the second shifting head 31 and the first shifting head 22 is stable and reliable and the gear shifting effect is excellent.

It can be understood that the gear shifting hub gear 211 is integrally formed with or fixedly connected to the gear shifting hub 21.

A vehicle according to an embodiment of the present invention includes the gear shifting and parking system 100 for the vehicle in the above embodiments.

The above gear shifting and parking system 100 is used in the vehicle according to the present invention, and the technical effects of the vehicle are the same with the technical effects of the above gear shifting and parking system 100, which is not be repeated herein.

In the description of the present disclosure, it should be understood that the orientation or positional relationships indicated by terms such as "center", "longitudinal", "lateral", "length", "width", "thickness", "up", "down", "front", "rear", "left", "right", "vertical", "horizontal", "top", "bottom", "inner", "outer", "clockwise", "anticlockwise" and the like are based on the orientation or positional relationships shown in the drawings, and are merely for the convenience of describing the present invention and the simplification of the description, and do not indicate or imply that the device or component referred must be in a particular orientation, or be constructed and operated in a particular orientation, and therefore should not be construed as a limitation to the present invention.

In the description of the present invention, "the first feature" and "the second feature" may include one or more of the features.

In the description of the present invention, "multiple" means two or more.

In the description of the present invention, the first feature "on" or "under" the second feature may include direct contact between the first and second features, and may also include that the first and second features are not in direct contact but through another feature contact between them.

In the description of the present invention, "above", "over" and "on" the second feature includes that the first feature is directly above and obliquely above the second feature, or simply indicates that the first feature is higher in horizontal height than the second feature.

Any reference in this specification to "an embodiment", "some embodiment", "example", "specific embodiment" and "some example", etc. means that a particular feature, structure, or characteristic described in connection with the embodiment is included in at least one embodiment of the invention. In this specification, the schematic expressions of the above terms do not necessarily refer to the same embodiments or examples. Furthermore, the specific features, structures, materials or characteristics described may be combined in any one or more embodiments or examples in a suitable manner.

Although the embodiments of the present invention have been shown and described, those skilled in the art can understand that various changes, modifications, substitutions and alterations can be made to these embodiments, wherein the scope of the present invention is defined by the appended claims.

## Claims

1. A gear shifting and parking system (100) for a vehicle, comprising:
a driving mechanism (10);
a gear shifting mechanism (20), wherein the gear shifting mechanism (20) comprises a gear shifting hub (21) and a first shifting head (22), a first gear shifting groove (a) and a second gear shifting groove (b) are defined in the gear shifting hub (21); the first shifting head (22) is in sliding fit with the first gear shifting groove (a) to allow shifting among a plurality of gears;
a parking mechanism (30), wherein the parking mechanism (30) has a second shifting head (31), and the second shifting head (31) is in sliding fit with the second gear shifting groove (b) to allow shifting between a parking gear (P) and a driving gear (N-P), and
a housing,
wherein the parking mechanism (30) comprises a parking arm (32) and a ratchet (33), the parking arm (32) is in power connection with the second shifting head (31), and the parking arm (32) selectively moves toward or away from the ratchet (33) driven by the second shifting head (31),
wherein a driving rod (34) is provided between the parking arm (32) and the second shifting head (31), one end of the driving rod (34) is connected to the second shifting head (31) through a bracket, and another end of the driving rod (34) is constructed as a truncated cone and a conical surface of the truncated cone abuts against the parking arm (32),
**characterized in that**, the second gear shifting groove (b) is in communication with the first gear shifting groove (a), the second gear shifting groove (b) is provided with a parking groove section and a driving groove section which correspond to the parking gear (P) and the driving gear (N-P), the first gear shifting groove (a) is provided with a plurality of gear groove sections which correspond to a plurality of gears, and the first shifting head (22) is located in a corresponding gear groove section when the second shifting head (31) is located in the parking groove section or the driving groove section.

2. The gear shifting and parking system (100) for the vehicle according to claim 1, wherein a pawl of the parking arm (32) is located above the ratchet (33), a depth of the second gear shifting groove (b) changes correspondingly according to gear shifting of the parking mechanism (30), so that the parking arm (32) is locked with the ratchet (23) under gravity.

3. The gear shifting and parking system (100) for the vehicle according to claim 1, wherein the gear shifting mechanism (20) comprises a shifting fork (23) and a shifting fork shaft (24), the first shifting head (22) is arranged on the shifting fork (23), the shifting fork shaft (24) is in sliding fit with the shifting fork (23) and an anti-wear bushing is provided between the shifting fork shaft (24) and the shifting fork (23).

4. The gear shifting and parking system (100) for the vehicle according to any one of claims 1 to 3, wherein the driving mechanism (10) comprises a driving motor (11) and a transmission assembly (12) in power connection with the driving motor (11), and the transmission assembly (12) is in power connection with the gear shifting hub (21).

5. The gear shifting and parking system (100) for the vehicle according to claim 4, wherein the transmission assembly (12) comprises an input gear (121), an intermediate gear (122) and an output gear (123), the input gear (121) is connected to the driving motor (11), the output gear (123) is meshed with a gear shifting hub gear (221) of the gear shifting hub (21), and the intermediate gear (122) is respectively meshed with the input gear (121) and the output gear (123).

6. A vehicle, comprising the gear shifting and parking system (100) for the vehicle according to any one of claims 1 to 5.

## Patentansprüche

1. Getriebeschaltungs- und Parksystem (100) für ein Fahrzeug, umfassend:
einen Antriebsmechanismus (10);
einen Gangschaltmechanismus (20), wobei der Gangschaltmechanismus (20) eine Gangschaltnabe (21) und einen ersten Schaltkopf (22) umfasst, wobei eine erste Gangschaltnut (a) und eine zweite Gangschaltnut (b) in der Gangschaltnabe (21) definiert sind; der erste Schaltkopf (22) in Gleiteinpassung mit der ersten Gangschaltnut (a) steht, um das Schalten zwischen mehreren Gängen zu ermöglichen; einen Parkmechanismus (30), wobei der Parkmechanismus (30) einen zweiten Schaltkopf (31) aufweist und der zweite Schaltkopf (31) in einer Gleitverbindung mit der zweiten Gangschaltnut (b) steht, um das Schalten zwischen einem Parkgang (P) und einem Fahrgang (N-P) zu ermöglichen, und
ein Gehäuse,
wobei der Parkmechanismus (30) einen Parkarm (32) und eine Sperrklinke (33) umfasst, der Parkarm (32) in Kraftverbindung mit dem zweiten Schaltkopf (31) steht und der Parkarm (32) selektiv in Richtung der Sperrklinke (33) oder von dieser weg bewegt wird, angetrieben durch den zweiten Schaltkopf (31), wobei eine Antriebsstange (34) zwischen dem Parkarm (32) und dem zweiten Schaltkopf (31) vorgesehen ist, ein Ende der Antriebsstange (34) über eine Halterung mit dem zweiten Schaltkopf (31) verbunden ist und ein anderes Ende der Antriebsstange (34) als Kegelstumpf ausgebildet ist und eine konische Fläche des Kegelstumpfs an dem Parkarm (32) anliegt,
**dadurch gekennzeichnet, dass**
die zweite Gangschaltnut (b) mit der ersten Gangschaltnut (a) in Verbindung steht, die zweite Gangschaltnut (b) mit einem Parknutabschnitt und einem Antriebsnutabschnitt versehen ist, die dem Parkgang (P) und dem Antriebsgang (N-P) entsprechen, die erste Gangschaltnut (a) mit einer Vielzahl von Gangnutabschnitten versehen ist, die einer Vielzahl von Gängen entsprechen, und der erste Schaltkopf (22) sich in einem entsprechenden Gangnutabschnitt befindet, wenn sich der zweite Schaltkopf (31) im Parknutabschnitt oder im Antriebsnutabschnitt befindet.

2. Getriebeschaltungs- und Parksystem (100) für das Fahrzeug gemäß Anspruch 1, wobei sich eine Klinke des Parkarms (32) über der Sperrklinke (33) befindet, sich die Tiefe der zweiten Gangschaltnut (b) entsprechend der Gangschaltung des Parkmechanismus (30) ändert, so dass der Parkarm (32) unter Schwerkraft mit der Sperrklinke (23) verriegelt wird.

3. Getriebeschaltungs- und Parksystem (100) für das Fahrzeug gemäß Anspruch 1, wobei der Getriebeschaltmechanismus (20) eine Schaltgabel (23) und eine Schaltgabelwelle (24) umfasst, der erste Schaltkopf (22) an der Schaltgabel (23) angeordnet ist, die Schaltgabelwelle (24) in Gleitpassung mit der Schaltgabel (23) steht und zwischen der Schaltgabelwelle (24) und der Schaltgabel (23) eine Verschleißschutzbuchse vorgesehen ist.

4. Getriebeschaltungs- und Parksystem (100) für das Fahrzeug gemäß einem der Ansprüche 1 bis 3, wobei der Antriebsmechanismus (10) einen Antriebsmotor (11) und eine Getriebeeinheit (12) umfasst, die mit dem Antriebsmotor (11) in Kraftverbindung steht, und die Getriebeeinheit (12) mit der Gangschaltnabe (21) in Kraftverbindung steht.

5. Getriebeschaltungs- und Parksystem (100) für das Fahrzeug gemäß Anspruch 4, wobei die Getriebeeinheit (12) ein Eingangsrad (121), ein Zwischenrad (122) und ein Ausgangsrad (123) umfasst, wobei das Eingangsrad (121) mit dem Antriebsmotor (11) verbunden ist, das Ausgangsrad (123) mit einem Gangschaltnabenrad (221) der Gangschaltnabe (21) in Eingriff steht und das Zwischenrad (122) jeweils mit dem Eingangsrad (121) und dem Ausgangsrad (123) in Eingriff steht.

6. Fahrzeug, umfassend das Getriebeschaltungs- und Parksystem (100) für das Fahrzeug gemäß einem der Ansprüche 1 bis 5.

## Revendications

1. Système de changement de vitesse et de stationnement (100) pour un véhicule, comprenant :
un mécanisme d'entraînement (10) ;
un mécanisme de changement de vitesse (20), le mécanisme de changement de vitesse (20) comportant un moyeu de changement de vitesse (21) et une première tête de changement (22), une première rainure de changement de vitesse (a) et une deuxième rainure de changement de vitesse (b) étant formées dans le moyeu de changement de vitesse (21) ; la première tête de changement (22) étant en ajustement glissant avec la première rainure de changement de vitesse (a) afin de permettre le changement entre plusieurs vitesses ;
un mécanisme de stationnement (30), le mécanisme de stationnement (30) comportant une deuxième tête de changement (31) et la deuxième tête de changement (31) étant en ajustement glissant avec la deuxième rainure de changement de vitesse (b) afin de permettre le changement entre une position de stationnement (P) et une position de conduite (N-P), et
un boîtier,
le mécanisme de stationnement (30) comportant un bras de stationnement (32) et un cliquet (33), le bras de stationnement (32) étant en connexion de force avec la deuxième tête de changement (31), et le bras de stationnement (32), entraîné par la deuxième tête de changement (31), se déplaçant au choix vers le cliquet (33) ou s'en éloignant,
une tige d'entraînement (34) étant prévue entre le bras de stationnement (32) et la deuxième tête de changement (31), une extrémité de la tige d'entraînement (34) étant reliée à la deuxième tête de changement (31) par une fixation, et une autre extrémité de la tige d'entraînement (34) étant réalisée sous forme de tronc de cône et une surface conique du tronc de cône s'appuiant contre le bras de stationnement (32),
**caractérisé en ce que**
la deuxième rainure de changement de vitesse (b) est en connexion avec la première rainure de changement de vitesse (a), la deuxième rainure de changement de vitesse (b) est pourvue d'une section de rainure de stationnement et d'une section de rainure de conduite qui correspondent à la position de stationnement (P) et à la position de conduite (N-P), la première rainure de changement de vitesse (a) est en connexion de force avec une pluralité de sections de rainure de vitesse correspondant à une pluralité de vitesses, et la première tête de changement (22) se trouve dans une section de rainure de vitesse correspondante lorsque la deuxième tête de changement (31) se trouve dans la section de rainure de stationnement ou dans la section de rainure de conduite.

2. Le système de changement de vitesse et de stationnement (100) pour un véhicule selon la revendication 1, sachant qu'une griffe du bras de stationnement (32) se trouve au-dessus du cliquet (33), une profondeur de la deuxième rainure de changement de vitesse (b) change en fonction d'une opération de changement de vitesse du mécanisme de stationnement (30), de sorte que le bras de stationnement (32) soit verrouillé par gravité avec le cliquet (23).

3. Le système de changement de vitesse et de stationnement (100) pour un véhicule selon la revendication 1, sachant que le mécanisme de changement de vitesse (20) comprend une fourchette de changement (23) et un arbre de fourchette de changement (24), la première tête de changement (22) est disposée sur la fourchette de changement (23), l'arbre de fourchette de changement (24) est dans un ajustement glissant avec la fourchette de changement (23), et une douille de protection contre l'usure est prévue entre l'arbre de fourchette de changement (24) et la fourchette de changement (23).

4. Le système de changement de vitesse et de stationnement (100) pour un véhicule selon l'une des revendications 1 à 3, sachant que le mécanisme d'entraînement (10) comporte un moteur d'entraînement (11) et un ensemble de transmission (12) relié au moteur d'entraînement (11) par une connexion de force, et l'ensemble de transmission (12) est en connexion de force avec le moyeu de changement de vitesse (21).

5. Le système de changement de vitesse et de stationnement (100) pour un véhicule selon la revendication 4, sachant que l'ensemble de transmission (12) comprend un pignon d'entrée (121), un pignon intermédiaire (122) et un pignon de sortie (123), le pignon d'entrée (121) est relié au moteur d'entraînement (11), le pignon de sortie (123) engrène avec un pignon de moyeu de changement de vitesse (221) du moyeu de changement de vitesse (21) et le pignon intermédiaire (122) engrène respectivement avec le pignon d'entrée (121) et le pignon de sortie (123).

6. Véhicule comprenant le système de changement de vitesse et de stationnement (100) pour un véhicule selon l'une des revendications 1 à 5.
